# EUROPÄISCHE PATENTSCHRIFT

(11) **EP 0 446 624 B1**
(45) Veröffentlichungstag und Bekanntmachung des Hinweises auf die Patenterteilung: **11.08.1993**
(21) Anmeldenummer: 91101841.4
(22) Anmeldetag: 09.02.1991
(51) Int. Cl.: B60G 17/056

(54) **Niveauregelventil**
Level regulating valve
Soupape de régulation de niveau

(30) Priorität: 12.03.1990 DE 4007828
(43) Veröffentlichungstag der Anmeldung: 18.09.1991
(73) Patentinhaber: GRAU GMBH, D-69123 Heidelberg (DE)
(72) Erfinder: Blanz, Roland, W-6901 Heiligkreuzsteinach (DE)
(74) Vertreter: Rehberg, Elmar, Dipl.-Ing.

(56) Entgegenhaltungen:
- EP-A- 0 185 565
- EP-A- 0 237 621
- DE-A- 2 451 349
- DE-A- 2 932 298
- DE-C- 3 333 888

## Beschreibung

Die Erfindung bezieht sich auf ein Niveauregelventil zum selbsttätigen Konstanthalten der Fahrgestellhöhe eines Fahrzeugs, insbesondere eines Kraftfahrzeugs mit Luftfederung, mit den im Oberbegriff des PatentAnspruchs 1 angegebenen Merkmalen.

Ein derartiges Niveauregelventil ist aus der DE-PS 33 33 888 bekannt. In einem Ventilgehäuse ist ein federbelasteter Doppelventilkörper vorgesehen, der mit einem Einlaßsitz ein Einlaßventil für eine zu einem oder mehreren Luftfederbälgen führende Leitung aufweist. Mit dem Doppelventilkörper arbeitet weiterhin ein hohler Ventilstößel zusammen, der axial verschiebbar gelagert ist und mit seinen oberen Ende einen dem Doppelventilkörper zugeordneten Auslaßsitz bildet. Der Ventilstößel ist über ein Stützglied an einer im Ventilgehäuse verdrehbar gelagerten Welle abgestützt, und zwar an einem an dieser Welle gebildeten Exzenter.

Die Welle ist über einen Betätigungshebel außerhalb des Ventilgehäuses verdrehbar, so daß auf diese Art und Weise eine Verdrehbewegung der Welle in eine Axialbewegung des Ventilstößels umgeformt wird. Zur Einstellung einer Abschlußstellung zwischen Einlaßventil und Auslaßventil ist der Ventilstößel gegenüber dem Stützglied in einem beide Teile miteinander verbindenden Gewinde verdrehbar gelagert, wobei das Stützglied seinerseits verdrehgesichert im Ventilgehäuse axialverschieblich geführt ist. Dem Ventilstößel ist eine Dichtung zum Abdichten der zu dem Luftfederbalg führenden Leitung zugeordnet, die in einer nur radial offenen Nut in einem speziellen Einsatzkörper angeordnet ist.

Die Einzelteile des Niveauregelventils sind in der überwiegenden Anzahl als Metallteile ausgebildet und werden entsprechend genau, meist durch eine spanende Bearbeitung, hergestellt. Die Lagerung der verdrehbaren Welle befindet sich einseitig neben einer von dem Ventilstößel, dem Doppelventilkörper und dem Stützglied gebildeten Mittelachse. Diese Lagerung ist in einem Angußzapfen im Ventilgehäuse aus Metall untergebracht, so daß hierdurch das Ventilgehäuse entsprechend aufwendig gestaltet ist.

Aus der EP-A-0 185 565 ist ein Niveauregelventil mit einem Gehäuse mit axial durchgehender, gestufter Bohrung bekannt, welches in einem Mittelbereich einen engsten Querschnitt und nach beiden Seiten anschließende, sich erweiternde Querschnitt aufweist, in die von beiden Seiten her Bauteile einschiebbar und montierbar sind. Bei diesen Bauteilen handelt es sich einerseits um einen die wesentlichen Dichtungen tragenden Einsatz, der durch eine mit Gewinde versehene Büchse und mittels eines im Gehäuse vorgesehenen Gegengewindes axial festgelegt wird. Andererseits ist ein Druckstück in einer zylindrischen Bohrung geführt, welches in bekannter Weise über eine Betätigungshebel mit Welle über eine Kulissenführung betätigbar ist. Das Gehäuse des Niveauregelventils ist mehrteilig ausgebildet. Die Einzelteile des Niveauregelventils aus Metall und gummielastischen Werkstoffen werden in der üblichen, bekannten Weise nacheinander montiert und demontiert.

Die DE-OS 24 51 349 zeigt ein Niveauregelventil, dessen über den Betätigungshebel verdrehbare Welle in einer durchgehenden Bohrung im Ventilgehäuse gelagert ist, wobei die Lagerung symmetrisch zu der Mittelachse des Ventilstößels angeordnet ist. Damit wird die Abstützung des Stützglieds und damit des Ventilstößels auf dem Exzenter der Welle verbessert. Zwischen dem Doppelventilkörper und dem Exzenter der Welle ist der Ventilstößel und das Stützglied vorgesehen, wobei beide Teile zur Einspannung einer die Abdichtung der zu dem Luftfederbalg führenden Leitung bewirkenden Membran mit Hilfe eines Gewindes ineinander verschraubbar sind. Eine Einstellung der Abschlußstellung ist damit jedoch nicht möglich.

Bei diesem Niveauregelventil sind bereits einige wenige Strukturelemente, so die Ventilkörper und das Stützglied, aus Kunststoff hergestellt. Es stellt keine Besonderheit dar, Ventilkörper aus Kunststoff, z.B. Elastomer herzustellen, um die Nachgiebigkeit dieses Werkstoffs in Verbindung mit Ventilsitzen auszunutzen. Auch die guten Gleiteigenschaften von Kunststoff dienen anhand des Stützglieds zu einer Minderung der Reibung zwischen Stützglied und Welle bzw. Exzenter. Eine grundlegend sich von der Bauweise aus Metall abkehrende Bauweise, die darauf gerichtet wäre, möglichst alle wesentlichen Strukturelemente eines Niveauregelventils aus Kunststoffteile auszubilden, ist nicht erkennbar.

Alle bekannten Niveauregelventile weisen eine Anzahl von Strukturelementen auf, die überwiegend aus Metall bestehen und einer sorgfältigen toleranzmäßigen Bearbeitung bedürfen, damit die gewünschte Funktionssicherheit erreicht wird. In der Regel ist das Ventilgehäuse, welches ebenfalls aus Metall besteht, mehrteilig ausgebildet, um die Montage des Niveauregelventils zu ermöglichen oder zu vereinfachen. Die Lagerung der verdrehbaren Welle, die einseitig zu der von dem Ventilstößel gebildeteten Mittelachse des Niveauregelventils angeordnet ist, muß entsprechend sorgfältig durchgeführt werden, damit die Aufnahme von Kräften einer das Stützglied in Anlage an dem Exzenter der Welle haltenden Feder möglich ist. Weiterhin verlangt ein solches Niveauregelventil einerseits eine gewisse Baugröße, um die für die Be- und Entlüftung der Luftfederbälge erforderlichen Querschnitte bereitzustellen; andererseits ist man bestrebt, derartige Niveauregelventile möglichst kostengünstig und klein herzustellen.

Die Erfindung geht von dieser Problematik aus und zielt darauf ab, ein preiswertes, einfach herstellbares und montagefreundliches Niveauregelventil der eingangs genannten Art bereitzustellen.

Erfindungsgemäß wird dies bei dem Niveauregelventil der eingangs beschriebenen Art in Verbindung mit den im kennzeichnenden Teil des Patentanspruchs 1 angegebenen Merkmalen erreicht.

Vorteilhafte weitere Ausgestaltungen der Erfindung sind in den Unteransprüchen gekennzeichnet.

Durch diese Gestaltung und Ausbildung ist es möglich, daß ein Großteil der Strukturteile des Niveauregelventils aus Kunststoff bestehen kann. Dies bezieht sich insbesondere auf das Ventilgehäuse, welches zudem noch einstückig ausgebildet sein kann, aber auch auf die Welle sowie den Ventilstößel und das Stützglied.

Das Gehäuse besteht als großvolumiges Strukturteil auf jeden Fall aus Kunststoff, um die vereinfachten Formgebungsmöglichkeiten des Kunststoffs hierfür zu nutzen. Es weist eine durchgehende Bohrung mit einem engsten Querschnitt im Mittelbereich und sich nach beiden Seiten anschließenden gestuften Absätzen auf, die entsprechend der Anordnung und Ausbildung der anderen Strukturteile vorgesehen sind. Die durchgehende Bohrung endet auf der einen Seite des Doppelventilkörpers in einem Anschluß für Vorratsluft, während auf der entgegengesetzten Seite eine entsprechende Ausnehmung für ein Flatterventil o. dgl. abgedeckt ist.

Damit kann der Doppelventilkörper einschließlich seiner federnden Abstützung von der einen Seite in Richtung der Mittelachse montiert werden. Von der anderen Seite ist es möglich, die Dichtung, ein Druckstück und die Einheit aus Ventilstößel und Stützglied einzuschieben und diese Teile durch Abstecken mit der Welle zu sichern. Das Druckstück ergänzt einen einseitig offenen Absatz der gestuften Bohrung im Ventilgehäuse zu einer Nut, die der Anordnung der ohnehin erforderlichen Dichtung des Ventilstößels dient. Dieses Druckstücks kann ebenfalls vorteilhaft aus Kunststoff hergestellt werden.

Die Lagerung der Welle, die jetzt beidseitig bezüglich der Mittelachse erfolgt, kann wesentlich einfacher gestaltet werden; besondere Gleitlager entfallen. Durch die symmetrische Anordnung wird die Kraftaufnahme über die Einheit aus Stützglied und Ventilstößel einerseits und über das Druckstück andererseits verbessert.

Infolge der Verwendungsmöglichkeit von nicht mehr nachbearbeiteten Strukturteilen besteht zwar die Gefahr, daß sich Herstellungstoleranzen in ungünstiger Weise addieren, jedoch ist auch bei der neuen Ausbildung des Niveauregelventils der Einstellbarkeit der Abschlußstellung Rechnung getragen, so daß insoweit trotzdem eine ordnungsgemäße und sichere Funktion erreicht wird.

Die Anordnung eines Angußstutzens zur Lagerung der Welle kommt ersatzlos in Fortfall, so daß das Ventilgehäuse diesbezüglich kleiner und einfacher ausgebildet ist.

Die erfindungsgemäße Ausbildung des Niveauregelventils ist unabhängig davon, ob das Niveauregelventil nur einen Luftfederbalg steuert oder ob unter Verwendung eines Einsatzkörpers und einer Querdrossel z. B. zwei unterschiedlichen Fahrzeugseiten zugeordnete Luftfederbälge über das Niveauregelventil angeschlossen sind und gesteuert werden. Im einen Fall ist der einseitig offene Absatz, der mit dem Druckstück die Nut bildet, im Ventilgehäuse untergebracht. Im anderen Fall ist in der Regel die Nut an einem Einsatzkörper gebildet. Ein solcher einseitig offener Absatz ist als Stufe in einer Bohrung, die bis zur äußeren Oberfläche des Ventilgehäuses durchgehend vorgesehen ist, wesentlich einfacher herzustellen als eine nur radial offene Nut. Solche lediglich radial offenen Nuten, wie sie für die Aufnahme von Dichtungen erforderlich sind, stellen Hinterschneidungen dar, die, wenn sie an metallenen Körpern vorgesehen sind, spanend durch einen Einstichvorgang hergestellt werden. Kunststoff läßt sich natürlich auch spanend bearbeiten, und zwar relativ leicht. Vorteilhaft kann bei der Gestaltung nach der Erfindung zur Herstellung der Kunststoffteile allein die Spritztechnik benutzt werden.

Das eigentliche Ziel der Erfindung wird jedoch dann erreicht, wenn das Gehäuse und die weiteren, aus Kunststoff bestehenden Strukturelemente sämtlich als Kunststoffspritzteile ausgebildet sind. Bei der Formgebung als Kunststoffspritzteil wären solche Hinterschneidungen, wie sie eine nur radial offene Nut darstellt, nur dann herstellbar, wenn gleichzeitig in der Spritzform ein kompliziert gestalteter und zudem noch geteilter Kern Anwendung fände. Ein einseitig axial offener Absatz, der in Verbindung mit einem Druckstück dann erfindungsgemäß eine Nut bildet, ist dagegen problemlos entformbar.

Die neue Ausbildung des Niveauregelventils läßt es auch ohne Weiteres zu, eine sich auf dem Stützglied abstützende Feder zu plazieren, die dafür sorgt, daß die Einheit aus Ventilstößel und Stützglied immer in Anlage an dem Exzenter der Welle gehalten wird. Die verdrehgesicherte Lage der Teile zueinander wird hierdurch nicht behindert.

Das Druckstück und das Stützglied können mit korrespondierenden Vorsprüngen und Ausnehmungen versehen sein, die eine verdrehgesicherte Axialbewegung des Stützglieds ermöglichen. Damit dient das Druckstück nicht nur der Abstützung der Dichtung und der Sicherung der axialen Lage der Dichtung sowie der Übertragung der von dem Druck der Druckluft im Luftfederbalg resultierenden Axialkraft auf die Dichtung, sondern es erfüllt gleichzeitig die Forderung nach einer verdrehgesicherten Führung des Stützglieds. Zwar beding dies, daß wiederum das Druckstück selbst verdrehgesichert im Ventilgehäuse angeordnet sein muß, jedoch gibt es hier mehrere Möglichkeiten der Realisierung.

Andererseits ist es möglich, daß das Druckstück nur zur Aufnahme der Axialkräfte vorgesehen ist und sich an der Welle abstützen kann. In diesem Fall ist eine verdrehgesicherte Lagerung des Stützglieds am Exzenter oder jedenfalls an der Welle erforderlich. Vorteilhaft ist es auf jeden Fall, wenn das Druckstück ortsfest und verdrehgesichert an der Welle abgestützt ist. Andererseits kann das Druckstück aber auch verdrehgesichert am Ventilgehäuse abgestützt sein. In einer bevorzugten Ausführungsform kann das Druckstück an zwei symmetrisch zu der Mittelachse angeordneten Stellen mit je einer dem Durchmesser der Welle entsprechenden Sattelfläche versehen sein. Damit wird es möglich, daß das Druckstück auf seiner Außenseite zylindrische Form aufweist und die entsprechende Ausnehmung im Ventilgehäuse ebenfalls zylindrisch gestaltet werden kann.

Abweichend davon ist es aber auch möglich, daß das Druckstück auf seiner Außenseite und die Ausnehmung im Ventilgehäuse auf ihrer Innenseite einen unrunden Querschnitt aufweisen. Ein solcher, beispielsweise 8- oder 6- eckig gestalteter Querschnitt erbringt dann die Verdrehsicherung des Druckstücks, wobei die verdrehgesicherte Lagerung des Stützglieds am Druckstück zusätzlich erfolgen sollte. Hierzu kann das Druckstück auf seiner Innenseite und das Stützglied auf seiner Außenseite je einen unrunden Querschnitt aufweisen, die mit Spiel aneinander angepaßt sind.

Das Stützglied und der Ventilstößel können einstückig ausgebildet sein, wobei dann zwischen Stützglied und Exzenter eine Einstellschraube vorgesehen ist. Es versteht sich, daß auch hier eine verdrehgesicherte Lagerung des mit dem Ventilstößel vereinigten Stützglieds vorgesehen sein muß.

Die Welle kann in einer durch das Ventilgehäuse durchgehenden Stufenbohrung gelagert und entsprechend gestuft ausgebildet sein. Diese Stufenbohrung weist zweckmäßig auf der dem Betätigungshebel gegenüberliegenden Seite des Ventilgehäuses den größeren Durchmesser auf, so daß die Welle von dieser entgegengesetzt zum Betätigungshebel angeordneten Seite her in das Ventilgehäuse eingesteckt werden kann und an einer durch die abgestufte Bohrung und die stufige Ausbildung der Welle gebildeten Schulter anliegt und andererseits durch das Abstecken mit dem Betätigungshebel gesichert ist. Damit ergibt sich auch eine eindeutige Reihenfolge bei der Montage bzw. Demontage der Einzelteile des Niveauregelventils.

Es ist aber auch möglich, daß die Welle in einer von der Seite des Betätigungshebels in das Ventilgehäuse eingebrachten Sackbohrung eingesteckt sein kann. In diesem Fall entfällt eine gegen das Eindringen von Schmutz wirksame Abdichtung und es muß auf andere Art und Weise Sorge dafür getragen sein, daß die Welle axial gesichert im Ventilgehäuse gehalten ist.

Ausführungsbeispiele der Erfindung sind in den Zeichnungen dargestellt und werden im Folgenden beschrieben. Es zeigen:
- Figur 1: eine Schnittdarstellung einer ersten Ausführungsform des Niveauregelventils,
- Figur 2: einen Schnitt gemäß der Linie II-II in Figur 1,
- Figur 3: eine Schnittdarstellung durch eine zweite Ausführungsmöglichkeit des Niveauregelventils und
- Figur 4: eine Schnittdarstellung durch eine weitere Ausführungsmöglichkeit des Niveauregelventils.

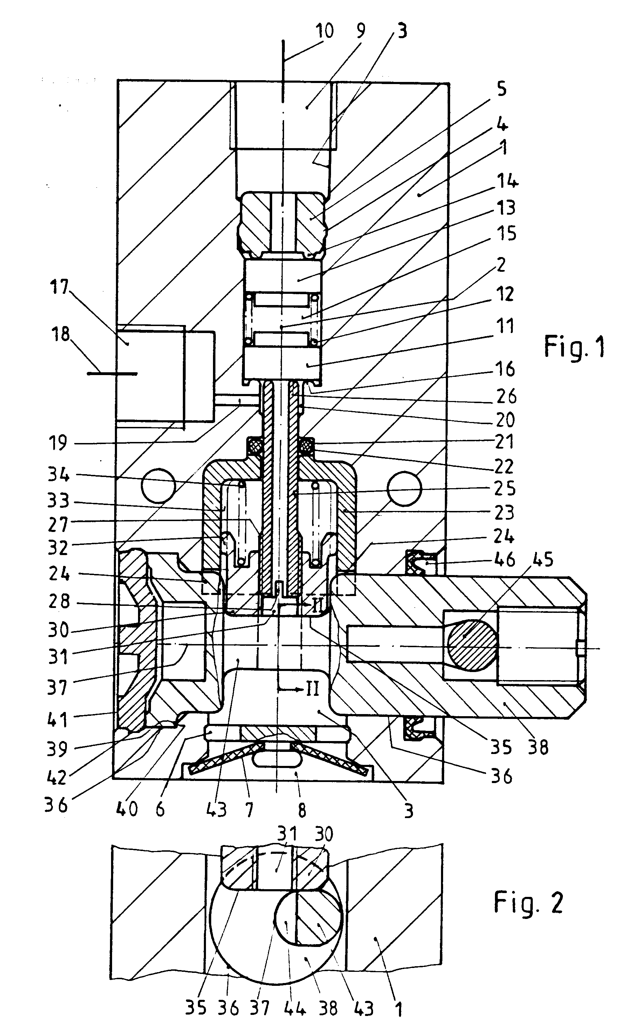

Das in Figur 1 dargestellte Niveauregelventil weist ein Gehäuse 1 auf, welches als einstückig gespritztes Kunststofformteil ausgebildet ist. Entlang einer Mittelachse 2 erstreckt sich eine durchgehende Bohrung 3, die etwa in der Mitte des Gehäuses 1 den kleinsten Durchmesser aufweist, an den sich dann in Stufen nach beiden Richtungen jeweils größere Durchmesser anschließen, so daß eine leichte Entformbarkeit des Gehäuses 1 aus einer Spritzform heraus gegeben ist. Die Bohrung 3 weist ansonsten nur Hinterschneidungen geringer Tiefe auf, wie sie bei der Formgebung des Gehäuses durch Spritzen überbrückbar sind. In einer solchen Hinterschneidung 4 ist eine Sicherungskappe 5, die ebenfalls als Kunststoffspritzteil ausgebildet sein kann, eingepreßt. In einer anderen Hinterschneidung 6 ist ein Flatterventil 7 angeordnet, welches eine Entlüftungsöffnung 8 gegen Eindringen von Schmutz schützt. Hinterschneidungen größerer Tiefe, die ohne komplizierte Kernteilung in einem Formwerkzeug für das Gehäuse nicht herstellbar sind, sind vermieden.

Das Gehäuse 1 weist einen Anschluß 9 für eine Leitung 10 auf, die mit einem Druckluftvorrat in Verbindung steht. In der Bohrung 3 ist von der Seite des Anschlusses 9 her zunächst ein Doppelventilkörper 11, eine Feder 12, ein Einfachventilkörper 13 und die Sicherungskappe 5 eingefügt, wobei die Sicherungskappe 5 durchbrochen ist und mit Hilfe eines an ihr vorgesehenen Sitzes 14 mit dem Einfachventilkörper 13 ein Rückschlagventil 13, 14 bildet. Zwischen dem Einfachventilkörper 13 und dem Doppelventilkörper 11 ist eine Vorratskammer 15 für Druckluft gebildet, in der auch die Feder 12 angeordnet ist. Der Doppelventilkörper 11 bildet mit einem im Gehäuse 1 gebildeten Sitz 16 ein Einlaßventil 11, 16.

Das Gehäuse weist einen Anschluß 17 für eine Leitung 18 auf, die zu einem oder mehreren Luftfederbälgen führt, die über das Niveauregelventil gesteuert werden. Der Anschluß 17 steht über eine Radialbohrung 19 mit einer im Gehäuse 1 gebildeten Durchströmkammer 20 in dauernder Verbindung, die nach dem Einlaßventil 11, 16 vorgesehen ist.

Die sich entlang der Mittelachse erstreckende Bohrung 3 bildet von der Stelle des engsten Durchmessers gesehen in Richtung auf die Entlüftungsöffnung 8 zunächst eine Nut 21, deren radiale Tiefe erheblich größer ist als die radiale Tiefe der Hinterschneidungen 4 und 6. Die Nut 21 ist in axialer Richtung auf die Entlüftungsöffnung 8 hin offen gestaltet, so daß von dieser Seite her eine Dichtung 22 eingeschoben werden kann, zu deren Aufnahme die Nut 21 bestimmt ist. Die Dichtung 22 wird in axialer Richtung von einem Druckstücke 23 gehalten und angepreßt, welches ebenfalls vorteilhaft als Kunststofformteil ausgebildet sein kann. Das Druckstück 23 ist etwa als abgeschnittener Hohlzylinder ausgebildet und weist entlang seines unterem Rands zwei Sattelflächen 24 auf. Innerhalb des Druckstücks 23 ist in der Bohrung 3 in Richtung der Mittelachse 2 ein Ventilstößel 25 vorgesehen, der zu Zwecken der Entlüftung hohl ausgebildet ist und an seinem oberen Endbereich einen Auslaßsitz 26 trägt, der mit dem Doppelventilkörper 11 ein Auslaßventil 11, 26 bildet. Der Ventilstößel 25 weist in seinem unteren Endbereich ein Gewinde 27 und eine Formgebung zum Ansatz eines Verdrehwerkzeugs, beispielsweise einen Schlitz 28, auf. Der Ventilstößel 25 ist mit seinem Gewinde 27 in ein Gewinde 29 eines Stützglieds 30 eingeschraubt, wobei das Stützglied 30 eine durchgehende Durchbrechung 31 aufweist. Der Ventilstößel 25 und das Stützglied 30 können ebenfalls als Kunststoffspritzteile oder -formteile ausgebildet sein. Das Stützglied 30 weist in seinem nach oben ragenden Teil Vorsprünge 32 auf, die sich im wesentlichen radial zu der Mittelachse 2 erstrecken. Die Vorsprünge 32 arbeiten mit Ausnehmungen 22 an dem Druckstück 23 zusammen, so daß das Stützglied 30 und das Druckstück 23 relativ zueinander zwar eine Axialbewegung, jedoch keine Drehung ausführen können. Damit wird eine Verdrehsicherung bei axialer Führung ermöglicht. Statt der Vorsprünge 32 und der Ausnehmungen 23 kann auch eine entsprechend unrunde Querschnittsgestaltung an den entsprechenden Stellen des Druckstücks 23 und des Stützglieds 30 vorgesehen sein, um diesbezüglich die Verdrehsicherung zu erreichen. Zwischen Druckstück 23 und Stützglied 30 ist eine Feder 34 vorgesehen. Das Stützglied 30 weist an seinem unteren Ende eine Stirnfläche 35 auf.

In eine Stufenbohrung 36, deren Achse 37 sich senkrecht zu der Mittelachse 2 erstreckt, ist eine Welle 38 eingesteckt, die sich auf beiden Seiten der Mittelachse 2 erstreckt. Die Welle 38 weist einen Absatz 39 auf, mit der sie an einer Schulter 40 der Stufenbohrung 36 anliegt. In der anderen Richtung wird die Welle 38 von einem Deckel 41 gehalten, der in eine Hinterschneidung 42 in der Stufenbohrung 36 eingeschnappt ist. Auch die Welle 38 und der Deckel 41 können als Kunststoffspritzteile ausgebildet sein. Die Welle 38 ist damit beidseitig von der Mittelachse 2 im Gehäuse 1 drehbar gelagert.

Auf Bereichen ihres Umfangs liegen die beiden Sattelflächen 24 des Druckstücks 23 an und stützen sich dort insoweit verdrehgesichert ab, ohne daß die Drehbarkeit der Welle 38 hierdurch behindert wird. Damit wird über die Sattelflächen 24 und die Anlage an den entsprechenden Gegenflächen der Welle 38 die verdrehgesicherte Lagerung des Druckstücks 23 erreicht.

In ihrem Mittelbereich weist die Welle 38 den Exzenter 43 auf, der als exzentrisch angeordneter Steg ausgebildet ist, auf dessen Oberfläche sich die Stirnfläche 35 des Stützglieds 30 abstützt. Insbesondere aus Figur 2 ist erkennbar, wie eine Drehbewegung der Welle 38 über den Exzenter 43 in eine Axialbewegung der Einheit aus Stützglied 30 und Ventilstößel 25 übertragen wird. Die Feder 34 sorgt dafür, daß die Stirnfläche 35 des Stützglieds 30 immer in Anlage an der Oberfläche des Exzenters 43 gehalten wird. Der Exzenter 43 weist innen (Figur 2) eine Ausnehmung 44 auf, so daß in dieser Stellung die freie Zugänglichkeit des Schlitzes 28 am Ventilstößel 26 nach Demontage des Flatterventils 7 gegeben ist, um die Abschlußstellung, also die relative Lage des Auslaßsitzes 26, zum Sitz 16 einzustellen.

Die Welle 38 ist einseitig aus dem Gehäuse 1 herausgeführt und steht dort mit einem Betätigungshebel 45 in Verbindung, über die die Welle 38 in bekannter Weise ihre Drehbewegung erhält. Eine Dichtung 46 gegen Staub und Flüssigkeit schützt in Verbindung mit dem Deckel 41 die Lagerung der Welle 38 im Gehäuse.

Aus der vorangehenden Beschreibung ist bereits erkennbar, daß nahezu sämtliche Einzelteile des Niveauregelventils als Kunststoffspritzteile hergestellt werden können, so daß insbesondere eine spanende Nachbearbeitung entfällt. Die Montage der Einzelteile des Niveauregelventils ist ebenfalls ersichtlich. Die Teile werden nacheinander eingebracht und gleichsam gegeneinander gegen Herausfallen abgesteckt. Dabei hält insbesondere die Welle 38 die Einheit aus Stützglied 30 und Ventilstößel 25 einerseits wie auch das Druckstück 23 andererseits, welches nicht nur die Aufgabe hat, die Dichtung 22 anzupressen, sondern auch die vom Druck auf die Dichtung 22 ausgeübte Kraft aufzunehmen. Es ist auch erkennbar, daß die Einzelteile des Niveauregelventils zu Wartungs- oder Reparaturzwecken leicht demontierbar sind, so daß Verschleißteile, beispielsweise die Dichtung 22, in einfacher Weise austauschbar ist, ohne daß das Gehäuse 1 des Niveauregelventils vom Fahrzeug entfernt werden müßte. Die Funktion des Niveauregelventils ist an sich bekannt und bedarf daher keiner weiteren Beschreibung. Trotz der einfachen Ausbildung ist auch bei diesem Niveauregelventil die Justierung der Abschlußstellung möglich, wobei die verdrehgesicherte Lagerung des Druckstücks 23 an der Welle 38 und die verdrehgesicherte Lagerung des Stützglieds 30 an dem Druckstück 23 die Möglichkeit eröffnen, dazu relativ den Ventilstößel 25 zu verdrehen und damit über die Gewinde 27 und 29 eine relative Axialverschiebung des Auslaßsitzes 26 zu erreichen.

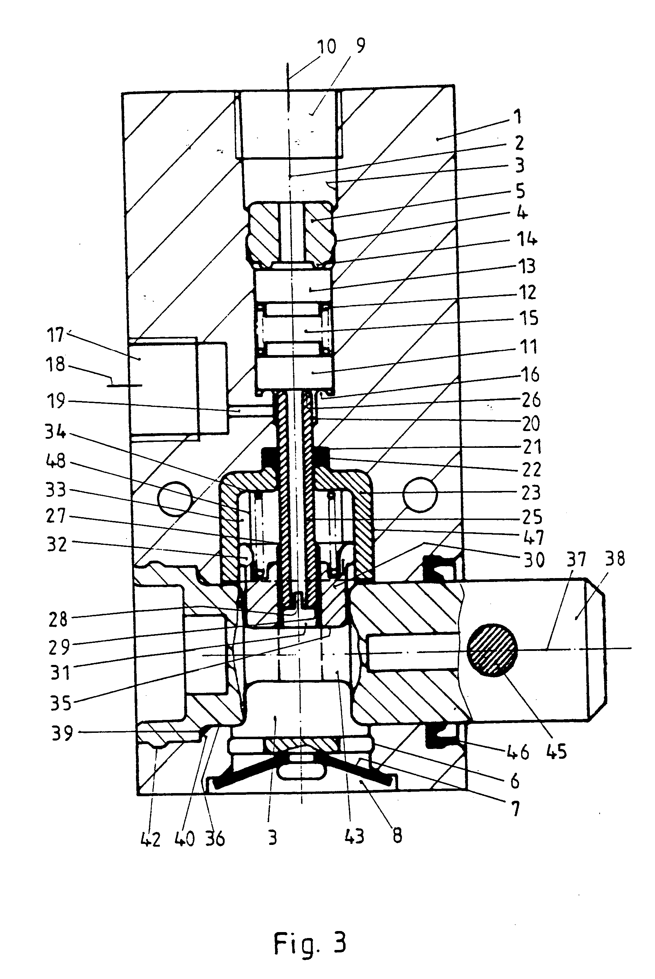

Das in Figur 3 dargestellte Niveauregelventil ist in großen Bereichen gleich gegenüber der Ausführungsform der Figuren 1 und 2 ausgebildet. Unterschiedlich sind nur das Druckstück 23 und die Welle 38 ausgebildet. Das Druckstück 23 weist unten eine umlaufende Stirnwand auf. Die verdrehgesicherte Lage des Druckstücks 23 muß auf andere Weise herbeigeführt werden. Hierzu ist die Bohrung 3, die sich insgesamt durch das Gehäuse 1 zieht, im Bereich des Druckstücks 23 mit einer unrunden Querschnittsgestaltung, beispielsweise in Form eines Sechs- oder Achtecks, ausgebildet. Es versteht sich, daß die äußere Oberfläche 47 entsprechend in der Form dieses Sechs- oder Achtecks ausgebildet ist. Auch auf der Innenseite kann das Druckstück 23 eine unrunde Oberfläche 48, z. B. in Form eines Sechs- oder Achtecks, aufweisen, wobei dann die Vorsprünge 32 des Stützglieds 30 auf diese Formgebung abgestimmt sind. Auf diese Weise wird das Druckstück 23 verdrehgesichert am Gehäuse 1 und das Stützglied 30 verdrehgesichert am Druckstück 23 gelagert, so daß auch insoweit der Ventilstößel 25 durch entsprechenden Kraftangriff an dem Schlitz 28 verdreht und damit die Abschlußstellung eingestellt werden kann.

Die Welle 38 ist hier einstückig mit dem Deckel 41 ausgestattet bzw. ausgebildet. Die Welle 38 bildet damit gleichsam auch den Deckel und sie weist auch eine umlaufende Rippe auf, die in die Hinterschneidung 42 eingreift.

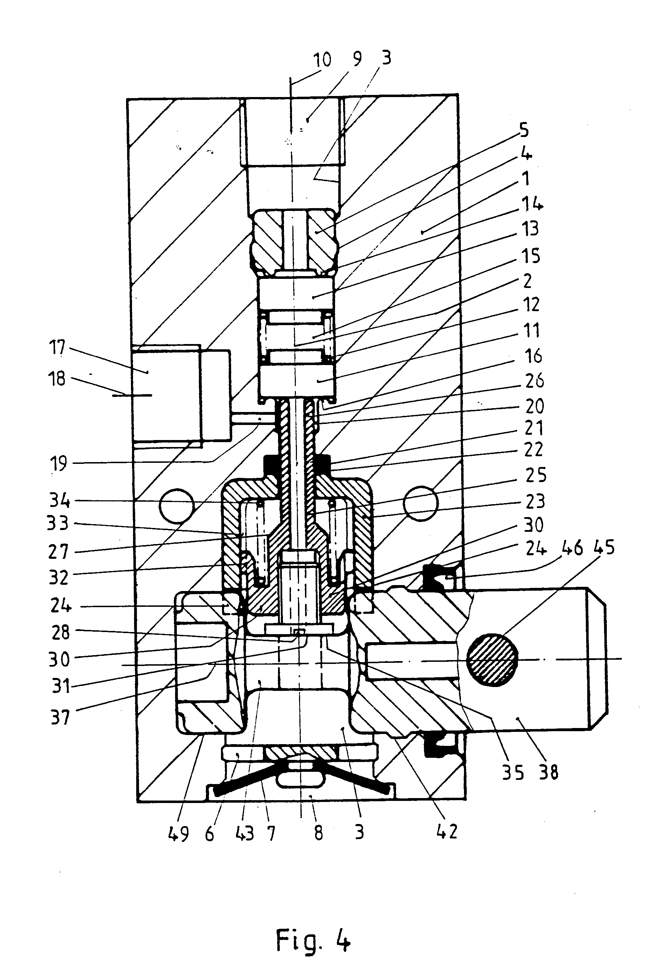

Bei der Ausführungsform gemäß Figur 4 ist das Druckstück 23 mit den beiden Sattelflächen 24 versehen. Es fehlt jedoch auch hier ein gesonderter Deckel 41. Die Welle 38 ist insoweit einstückig ausgebildet und hier in eine Sackbohrung 49 eingesteckt, wobei auch hier ein umlaufender Rand in eine Hinterschneidung 42 einrastet. Diese Ausbildung hat den Vorteil, daß eine zusätzliche Öffnung am Gehäuse 1 vermieden wird und insoweit am Niveauregelventil eine weitere Stelle vermieden wird, so daß dort Schmutz nicht eindringen kann.

Der Ventilstößel 25 und das Stützglied 30 sind hier einstückig ausgebildet. Um die Abschlußstellung einstellbar zu machen, ist in einem Gewinde an dem Stützglied 30 bzw. dem Ventilstößel 25 eine Einstellschraube 50 vorgesehen, die auf ähnliche Weise verdreht werden kann, wie zuvor der Ventilstößel 25 bei der Ausführungsformen der Figuren 1 bis 3. Auch auf diese Art und Weise kann die relative Höhe des Auslaßsitzes 26 eingestellt werden; nur ist hier der Ventilstößel 25 selbst verdrehsicher gelagert und daher an einem Drehen während der Justierung gehindert.

## Patentansprüche

1. Niveauregelventil zum selbsttätigen Konstanthalten der Fahrgestellhöhe eines Fahrzeugs, insbesondere eines Kraftfahrzeugs mit Luftfederung, mit einem Ventilgehäuse (1), einem federbelasteten Doppelventilkörper (11), einem Einlaßsitz (16) für den Doppelventilkörper, einem einen Auslaßsitz (26) für den Doppelventilkörper tragenden und in axialer Richtung verschiebbaren, einer in einer Nut (21) angeordneten Dichtung (22) zugeordneten hohlen Ventilstößel (25), der zum Zweck der Einstellung der Abschlußstellung gegenüber einem sich auf einem Exzenter (43) einer quer zur Mittelachse (2) des Ventilstößels (25) verlaufenden, gelagerten Welle (38) abstützenden, verdrehgesichert geführten Stützglied (30) axial verstellbar ist und dessen Stellung relativ zum Gehäuse (1) über einen außerhalb des Gehäuses angeordneten, schwenkbaren und an der Welle (38) angreifenden Betätigungshebel (34) veränderbar ist, dadurch gekennzeichnet, daß das Gehäuse (1) aus Kunststoff besteht, eine axial durchgehende Bohrung (3) mit einem im Mittelbereich angeordneten engsten Querschnitt und sich nach beiden Seiten anschließenden gestuften, sich erweiternden Querschnitten aufweist, daß wesentliche Strukturelemente, z. B. die Welle (38) und/oder der Ventilstößel (25) und/oder ein Stützglied (30), aus Kunststoff bestehen, daß die Welle (38) beidseitig der Mittelachse (2) des Ventilstößels (25) im Gehäuse (1) gelagert und der Exzenter innerhalb des Durchmessers der Welle ausgebildet ist, und daß ein in Richtung der Mittelachse (2) in die gestufte Bohrung (3) im Gehäuse (1) einschiebbares Druckstück (23) vorgesehen ist, welches mit einem Absatz der gestuften Bohrung (3) die Nut (21) für die Dichtung (22) bildet und sich auf der Welle (38) abstützt.

2. Niveauregelventil nach Anspruch 1, dadurch gekennzeichnet, daß das Gehäuse (1) und die aus Kunststoff bestehenden Strukturelemente als Kunststoffspritzteile ausgebildet sind.

3. Niveauregelventil nach Anspruch 1 oder 2, dadurch gekennzeichnet, daß das Druckstück (23) und das Stützglied (30) mit korrespondierenden Vorsprüngen (32) und Ausnehmungen (33) versehen sind, die eine verdrehgesicherte Axialbewegung des Stützglieds (30) ermöglichen.

4. Niveauregelventil nach Anspruch 1 oder 3, dadurch gekennzeichnet, daß das Druckstück (23) ortsfest und verdrehgesichert an der Welle (38) abgestützt ist.

5. Niveauregelventil nach Anspruch 1 oder 3, dadurch gekennzeichnet, daß das Druckstück (23) verdrehgesichert am Ventilgehäuse (1) abgestützt ist.

6. Niveauregelventil nach Anspruch 4, dadurch gekennzeichnet, daß das Druckstück (23) an zwei symmetrisch zu der Mittelachse (2) angeordneten Stellen mit je einer dem Durchmesser der Welle (38) entsprechenden Sattelfläche (24) versehen ist.

7. Niveauregelventil nach Anspruch 5, dadurch gekennzeichnet, daß das Druckstück (23) auf seiner Außenseite und die Ausnehmung (3) im Ventilgehäuse auf ihrer Innenseite einen unrunden Querschnitt aufweisen.

8. Niveauregelventil nach Anspruch 1 oder 2, dadurch gekennzeichnet, daß das Stützglied (30) und der Ventilstößel (25) einstückig ausgebildet sind, und daß zwischen Stützglied (30) und Exzenter (43) eine Einstellschraube (50) vorgesehen ist.

9. Niveauregelventil nach Anspruch 1, dadurch gekennzeichnet, daß die Welle (38) in einer durch daß Ventilgehäuse durchgehenden Stufenbohrung (36) gelagert ist und entsprechend gestuft ausgebildet ist.

10. Niveauregelventil nach Anspruch 1, dadurch gekennzeichnet, daß die Welle (38) in eine von der Seite des Betätigungshebels (45) in das Ventilgehäuse eingebrachten Sackbohrung (49) eingesteckt ist.

## Claims

1. Level-regulating valve for automatically keeping constant the chassis height of a vehicle, especially a motor vehicle with air suspension, having a valve housing (1), a spring-loaded double valve body (11), an inlet seat (16) for the double valve body, and a hollow valve tappet (25) which carries an outlet seat (26) for the double valve body, is displaceable in the axial direction and is assigned to a gasket (22) arranged in a groove (21) and which, for the purpose of adjusting the shut-off position, is axially adjustable relative to a supporting member (30) guided in a rotation-prevented manner and supported on an eccentric (43) of a mounted shaft (38) extending transversely relative to the mid-axis (2) of the valve tappet (25), and of which the position relative to the housing (1) can be varied via a pivotable actuating lever (34) arranged outside the housing and engaging on the shaft (38), characterised in that the housing (1) consist of plastic and has an axially continuous bore (3) with a narrowest cross-section arranged in the middle region and with stepped widening cross-sections adjoining it on both sides, in that essential structural elements, for example the shaft (38) and/or the valve tappet (25) and/or a supporting member (30), consist of plastic, in that the shaft (38) is mounted in the housing (1) on both sides of the mid-axis (2) of the valve tappet (25) and the eccentric is formed within the diameter of the shaft, and in that there is provided a thrust piece (23) which can be pushed into the stepped bore (3) in the housing (1) in the direction of the mid-axis (2) and which forms the groove (21) for the gasket (22) by means of an offset of the stepped bore (3) and is supported on the shaft (38).

2. Level-regulating valve according to Claim 1, characterised in that the housing (1) and the structural elements consisting of plastic are designed as plastic injection mouldings.

3. Level-regulating valve according to Claim 1 or 2, characterised in that the thrust piece (23) and the supporting member (30) are provided with corresponding projections (32) and recesses (33) which allow a rotation-prevented axial movement of the supporting member (30).

4. Level-regulating valve according to Claim 1 or 3, characterised in that the thrust piece (23) is supported on the shaft (38) at a fixed location and in a rotation-prevented manner.

5. Level-regulating valve according to Claim 1 or 3, characterised in that the thrust piece (23) is supported on the valve housing (1) in a rotation-prevented manner.

6. Level-regulating valve according to Claim 4, characterised in that the thrust piece (23) is provided at each of two points arranged symmetrically to the mid-axis (2) with a saddle surface (24) corresponding to the diameter of the shaft (38).

7. Level-regulating valve according to Claim 5, characterised in that the thrust piece (23) has on its outside, and the recess (3) in the valve housing on its inside, a non-round cross-section.

8. Level-regulating valve according to Claim 1 or 2, characterised in that the supporting member (30) and the valve tappet (25) are made in one piece, and in that an adjusting screw (50) is provided between the supporting member (30) and eccentric (43).

9. Level-regulating valve according to Claim 1, characterised in that the shaft (38) is mounted in a stepped bore (36) continuous through the valve housing and is made correspondingly stepped.

10. Level-regulating valve according to Claim 1, characterised in that the shaft (38) is inserted into a blind bore (49) made in the valve housing from the side of the actuating lever (45).

## Revendications

1. Vanne régulatrice de niveau pour maintenir automatiquement constante la hauteur du châssis d'un véhicule, en particulier d'un véhicule à suspension pneumatique, avec un boîtier de vanne (1), un clapet double (11) taré par un ressort, un siège d'admission (16) pour le clapet double, un poussoir de soupape creux (25) portant un siège d'échappement (26) pour le clapet double, ce poussoir étant coulissant dans le sens axial et étant associé à un joint étanche (22) disposé dans une gorge (21) et étant, pour le réglage de la position de fermeture, réglable axialement par rapport à un organe d'appui (30) guidé en étant empêché de tourner et prenant appui sur un excentrique (43) d'un arbre (38) s'étendant perpendiculairement à l'axe médian (2) du poussoir de soupape (25), dont la position par rapport au boîtier (1) est modifiable au moyen d'un levier de manoeuvre (34) pivotant, disposé à l'extérieur du boîtier et agissant sur l'arbre 38,
**caractérisée** en ce que le boîtier (1) est en matière plastique, en présentant un alésage axial traversant (3) avec une section la plus étroite disposée dans la région médiane et des sections en gradins s'élargissant et se raccordant de part et d'autre, en ce que des éléments structurels importants, par exemple l'arbre (38) et/ou le poussoir de soupape (25) et/ou un organe d'appui (30) sont en matière plastique, en ce que l'arbre (38) est monté dans le boîtier (1) de part et d'autre de l'axe médian (2) du poussoir de soupape (25) et l'excentrique est ménagé à l'intérieur du diamètre de l'arbre, et en ce qu'il est prévu une pièce de pression (23) pouvant être insérée dans l'alésage à gradins (3) dans le boîtier (1) dans le sens de l'axe médian (2), cette pièce (23) formant avec un épaulement de l'alésage à gradins (3) la gorge (21) pour le joint étanche (22) et prenant appui sur l'arbre (38).

2. Vanne régulatrice de niveau selon la revendication 1, caractérisée en ce que le boîtier (1) et les éléments structurels en matière plastique sont des pièces moulées par injection.

3. Vanne régulatrice de niveau selon la revendication 1 ou 2, caractérisée en ce que la pièce de pression (23) et l'organe d'appui (30) sont munis de saillants (32)et d'évidements (33) correspondants qui permettent un mouvement axial de l'organe d'appui (30) tout en l'empêchant de tourner.

4. Vanne régulatrice de niveau selon la revendication 1 ou 3, caractérisée en ce que la pièce de pression (23) est à poste fixe et prend appui sur l'arbre (38) en étant empêchée de tourner.

5. Vanne régulatrice de niveau selon la revendication 1 ou 3, caractérisée en ce que la pièce de pression (23) prend appui sur le boîtier (1) de la vanne en étant empêchée de tourner.

6. Vanne régulatrice de niveau selon la revendication 4, caractérisée en ce que la pièce de pression (23) est munie, en deux endroits disposés symétriquement par rapport à l'axe médian (2),chaque fois d'une surface (24) en forme de selle correspondant au diamètre de l'arbre (38).

7. Vanne régulatrice de niveau selon la revendication 5, caractérisée en ce que la pièce de pression (23) présente une section non circulaire sur son côté extérieur, et l'alésage (3) dans le boîtier présente une section non circulaire sur son côté intérieur.

8. Vanne régulatrice de niveau selon la revendication 1 ou 2, caractérisée en ce que l'organe d'appui (30) et le poussoir de soupape (25) sont d'une seule pièce et en ce qu'une vis de réglage (50) est prévue entre l'organe d'appui (30) et l'excentrique (43).

9. Vanne régulatrice de niveau selon la revendication 1, caractérisée en ce que l'arbre (38) est monté dans un alésage à gradins (36) traversant le boîtier de la vanne et présente une forme en gradins correspondante.

10. Vanne régulatrice de niveau selon la revendication 1, caractérisée en ce que l'arbre (38) est inséré dans un trou borgne (49) ménagé dans le boîtier de la vanne à partir du côté du levier de manoeuvre (45).
